Europäisches Patentamt

European Patent Office

Office européen des brevets

(11) Veröffentlichungsnummer: **0 304 806**

**A2**

(19)

# (12) EUROPÄISCHE PATENTANMELDUNG

(21) Anmeldenummer: **88113442.3**

(51) Int. Cl.4: **G06F 12/08**

(22) Anmeldetag: **18.08.88**

(30) Priorität: **28.08.87 DE 3728862**

(43) Veröffentlichungstag der Anmeldung:
**01.03.89 Patentblatt 89/09**

(84) Benannte Vertragsstaaten:
**BE CH DE FR GB IT LI NL**

(71) Anmelder: **Siemens Aktiengesellschaft Berlin und München**
**Wittelsbacherplatz 2**
**D-8000 München 2(DE)**

(72) Erfinder: **Hach, Werner, Dipl.-Ing.(FH)**
**Jahnstrasse 16**
**D-6780 Pirmasens(DE)**

(54) **Anordnung zur Verwaltung von Daten und Adressen in einem zwischen einem Zentralprozessor und einem Hauptspeicher geschalteten Pufferspeicher.**

(57) Die Erfindung bezieht sich auf eine Anordnung zur Verwaltung von Daten und Adressen in einem zwischen einem Zentralprozessor und einem Hauptspeicher geschalteten Pufferspeicher (Cache), bei der beim Beschreiben und Löschen von Daten im Hauptspeicher im Pufferspeicher (Cache) entsprechende Gültigbits für den Zugriff des Zentralprozessors auf die Daten gesetzt bzw. gelöscht sind. Um einen Mehrfachzugriff auf den Hauptspeicher zu ermöglichen, ist eine Logikanordnung vorhanden, die bei einem Verändern von Daten im Hauptspeicher durch Direkt-Speicher-Zugriff (DMA) die Verwaltung der Gültigbits auf dem Pufferspeicher derart steuert, daß bei einem Direkt-Speicher-Schreibzugriff im Nibble-Mode auf mehrere Adressen im Hauptspeicher, die auch im Pufferspeicher vorhanden sind, zum Löschen der Gültigbits die gleiche Zeit benötigt wird wie bei einem normalen Direkt-Speicher-Zugriff auf eine Hauptspeicheradresse.

Die Erfindung ist anwendbar bei Zentraleinheiten von Digitalrechnern (SICOMP M Rechner).

FIG 2

EP 0 304 806 A2

## Anordnung zur Verwaltung von Daten und Adressen in einem zwischen einem Zentralprozessor und einem Hauptspeicher geschalteten Pufferspeicher

Die Erfindung betrifft eine Anordnung mit den Merkmalen des Oberbegriffs des Anspruchs 1.

Ein beispielsweise aus Löbel/Schmid/Müller "Lexikon der Datenverarbeitung", Siemens-Verlag 1969, 4. Auflage, Seiten 119 bis 123, bekannter Cache ist ein Pufferspeicher zwischen Zentralprozessor und Hauptspeicher, der die Speicherzugriffszeit des Zentralprozessors verkürzt und den Systembus entlastet. Das Cache ist in drei Funktionsblöcke aufgeteilt: interner Assoziativteil, externer Assoziativteil, Datenteil. Der interne Assoziativteil entscheidet, ob ein Datum unter der angebotenen Adresse im Datenteil des Caches hinterlegt ist oder nicht. Ist das Datum nicht vorhanden, greift das Cache auf den Hauptspeicher zu, speichert das Datum in seinem Datenteil ab und reicht es gleichzeitig an den Zentralprozessor weiter.

Der externe Assoziativteil sorgt dafür, daß die Daten, die im Cache unter den gleichen Adressen vorhanden sind wie im Hauptspeicher, auch miteinander übereinstimmen. Wird eine Adresse des Hauptspeichers, die auch im Cache vorhanden ist, durch den Direkt-Speicher-Zugriffsverkehr (DMA-Verkehr) im Hauptspeicher neu beschrieben, wird im internen und externen Assoziativteil ein entsprechendes Gültigbit gelöscht. Will nun der Zentralprozessor auf diese Adresse zugreifen, ist im internen Assoziativteil das zugehörige Gültigbit gelöscht, und das Cache holt das aktuelle Datum aus dem Hauptspeicher. Der Datenteil ist hierbei der eigentliche Pufferspeicher.

Das Cache hat die Möglichkeit, im sogenannten Nibble-Mode auf den Hauptspeicher zuzugreifen und dadurch vier Doppelworte auszulesen. Dies geschieht in wesentlich kürzerer Zeit als das Auslesen von vier Doppelworten mit vier Einzelzugriffen. Die Betriebsart "Nibble-Mode" als Mehrfachzugriff in einem Speicherzyklus dient somit der Erhöhung der Datenrate und entlastet den Systembus. Der Adreßblock wird durch modulo-4-Hochzählung der niederwertigsten zwei Bits der Doppelwortadresse bestimmt.

Beispiel:

Doppelwortadresse: 3F2 (HEX)
zugehöriger Nibble-Block: 3F2 (HEX)
3F3 (HEX)
3F0 (HEX)
3F1 (HEX)

Dadurch, daß durch den DMA-Verkehr einzelne Doppelwort-Schreibzugriffe wie auch Nibble-Schreibzugriffe möglich sind, ergibt sich ein Problem bei der Verwaltung der Gültigbits. Das Gültigbit gibt an, ob ein Datum, das unter einer bestimmten Adresse im Cache hinterlegt ist, noch identisch ist mit dem Datum, das im Hauptspeicher unter der gleichen Adresse hinterlegt ist.

Der Erfindung liegt die Aufgabe zugrunde, eine Anordnung der angegebenen Art so weiterzubilden, daß auch bei Mehrfachzugriffen auf den Hauptspeicher im Nibble-Mode die Verwaltung der Gültigbits eine möglichst geringe Zeit beansprucht.

Zur Lösung dieser Aufgabe weist eine Anordnung der eingangs angegebenen Art die Merkmale des Kennzeichens des Anspruchs 1 auf. Die erfindungsgemäße Anordnung gewährleistet durch die Logikschaltung in vorteilhafter Weise eine Berücksichtigung der Besonderheiten des Mehrfachzugriffs im Nibble-Mode, derart, daß das Auftreten dieses Mehrfachzugriffs erkannt wird und somit ein schnelles Lese-/ und Schreibverfahren für die Gültigbits möglich wird.

Mit den Merkmalen des Anspruchs 2 ergibt sich in vorteilhafter Weise, daß für den Fall, daß durch einen DMA-Zugriff im Nibble-Mode vier Hauptspeicherzellen verändert werden, die auch im Cache hinterlegt sind, der CPU lediglich die gleiche Zeit verlorengeht als bei einem normalen DMA-Zugriff, bei dem nur eine Hauptspeicherzelle verändert wird.

Unabhängig davon, ob ein DMA-Zugriff im Nibble-Mode erfolgt oder in einem Doppelwortzugriff, es werden nur die Gültigbits der Doppelwortadressen gelöscht, die auch im Hauptspeicher neu beschrieben wurden. Die Schaltung besteht aus nur wenigen Bauelementen.

Die Erfindung wird anhand der Figuren erläutert, wobei

Figur 1 ein Diagramm der Taktimpulse bei einem Speicherzugriff,

Figur 2 ein Blockschaltbild eines Ausführungsbeispiels der Anordnung zum Verwalten eines Gültigbits und

Figur 3 ein Schaubild der internen Struktur eines Schreib-Lese-Speichers zur Speicherung der Gültigbits zeigen.

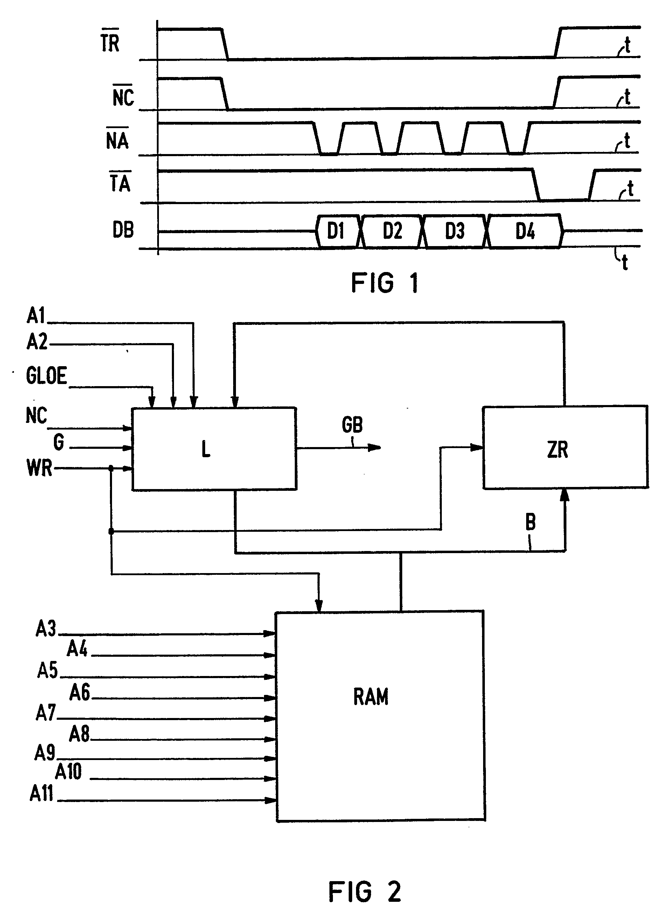

Beim Impulsdiagramm nach der Figur 1 sind über der Zeit t die Signale TR für den Speicherzugriff, NC für den Nibble-Mode, NA als Quittungssignale für Einzelzugriffe, TA als Quittungssignal für den gesamten Speicherzugriff und DB für die Datensignale auf einem Datenbus dargestellt.

Die Signale werden im folgenden kurz erläutert. Parallel zu der Anforderung für einen Speicherzugriff kommt das Signal "Nibble-Control" NC. Es besagt, daß es sich um einen Zugriff im Nibble-Mode handelt. Nach der normalen Zugriffszeit liefert der Speicher das erste zu verarbeitende Doppelwort. Parallel dazu kommt eine Nibble-Quittung NA, die besagt, daß das erste Doppelwort des Nibble-Blocks gültig ist.

Darauf folgen in sehr kurzen Abständen die drei restlichen Doppelworte des Nibble-Blocks, jeweils von einer Nibble-Quit tung begleitet. Nach der vierten und letzten Nibble-Quittung NA kommt eine Gesamtquittung TA, und diese beendet den Speicherzugriff.

Da im DMA-Verkehr (Direktspeicherzugriff) einzelne Doppelwortzugriffe genauso möglich sind wie Nibble-Zugriffe, muß pro Doppelwort ein Gültigbit geführt werden.

Wenn durch DMA ein Doppelwort in eine Adresse des Hauptspeichers geschrieben wird, die auch im hier nicht näher erläuterten Pufferspeicher (Cache) vorhanden ist, muß das Gültigbit unter dieser Adresse im Pufferspeicher gelöscht werden. Erfolgt nun ein Schreibzugriff durch DMA im Nibble-Mode auf eine Adresse des Hauptspeichers, die auch im Cache vorhanden ist, muß unter vier Doppelwortadressen im Cache das Gültigbit gelöscht werden. Dazu sind vier Taktzyklen notwendig, denn es müssen vier verschiedene Adressen an den Gültigbit-RAMs angelegt werden. Während dieser Zeit kann der Zentralprozessor weder auf den Hauptspeicher noch auf das Cache zugreifen.

Da bei einem Nibble-Zugriff auf dem Systembus nur eine Adresse aus dem Nibble-Block anliegt, wäre auf dem Cache eine aufwendige Schaltung notwendig, um die restlichen drei Adressen zu erzeugen. Dieses Problem wird durch ein Ausführungsbeispiel einer Logikanordnung gemäß der Figur 2 gelöst. Sie hat den Vorteil, daß sie zum Löschen von vier Gültigbits nicht mehr Zeit benötigt als zum Löschen eines einzelnen Gültigbits. Sie besteht nur aus drei Bauelementen.

Adreßbits A1 ... A11 liegen gemäß Figur 2 an Eingängen einer Logik L und eines Schreib-Lese-Speichers RAM an. Ferner ist ein Signal G vorhanden, welches bestimmt, ob ein Gültigbit GB im Schreib-Lese-Speicher RAM gesetzt wird oder nicht. Das Gültigbit besagt, daß unter der anliegenden Adresse ein gültiges Datum in einem Cache des hier nicht dargestellten Zentralprozessors abgespeichert ist. Ein Signal GLOE bewirkt im aktiven Fall, daß die Gültigbits GB gelöscht werden. Wenn das bereits anhand der Figur 1 erläuterte Signal NC aktiv ist, handelt es sich um einen Nibble-Zugriff, und wenn das ebenfalls bereits erläuterte Signal WR aktiv ist, werden die Gültigbits GB in den Schreib-Lese-Speicher RAM eingeschrieben. Hierzu wird neben der Logik L auch der Schreib-Lese-Speicher RAM und ein Zwischenregister ZR mit dem Signal WR beaufschlagt. Dieser Zwischenspeicher speichert die durch die Adreßbits A3 ... A11 adressierte Zeile im Schreib-Lese-Speicher RAM, wenn der Schreib-Lese-Speicher RAM auf das "Einschreiben" geschaltet ist. Die Logik L verändert diese zwischengespeicherte Zeile in Abhängigkeit von den Signalen NC, G, GLOE, A1 und A2. Mit dem Inaktivwerden des Signals WR wird die veränderte Zeile in den Schreib-Lese-Speicher RAM zurückgeschrieben.

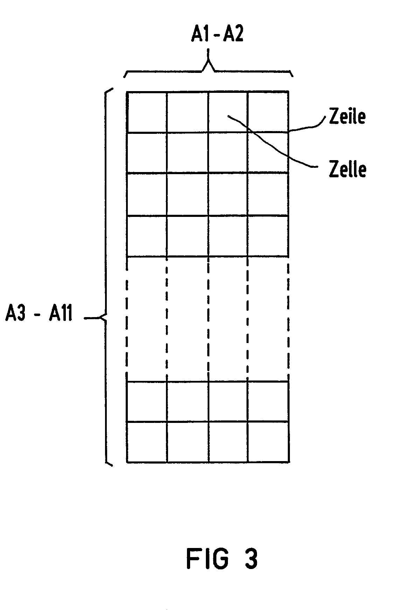

Die Funktion wird auch anhand der Figur 3 erläutert. In Abhängigkeit von dem Signal NC wird mit dem Signal WR der Inhalt einer Zeile des Schreib-Lese-Speichers RAM mit dem Signal G beschrieben oder eine einzelne Zelle der Zeile, bestimmt durch A1 und A2.

Mit dem Signal WR wird der momentane Inhalt der durch A3 ... A11 bestimmten Zeile in dem Zwischenspeicher ZS gespeichert. Danach ist der Schreib-Lese-Speicher RAM auf "Einschreiben" geschaltet. Die Ausgänge des Zwischenspeichers ZS werden derart verändert, daß in Abhängigkeit von dem Signal NC entweder die gesamte Zeile oder nur eine Zelle der Zeile, bestimmt durch A1 und A2, verändert wird. Die so veränderte Zeile ist nach dem Inaktivwerden des Signals WR in den Schreib-Lese-Speicher RAM eingeschrieben.

Beim Auslesen bestimmt das Signal NC, ob das Gültigbit GB aus einer Zelle einer Zeile, bestimmt durch A1 und A2, oder aus einer ganzen Zeile abgeleitet wird.

Wird es aus einer Zeile abgeleitet, ist es gesetzt, wenn in einer der vier Zellen der Zeile ein Bit gesetzt ist.

## Ansprüche

1. Anordnung zur Verwaltung von Daten und Adressen
- in einem zwischen einem Zentralprozessor und einem Hauptspeicher geschalteten Pufferspeicher (Cache),
- bei der beim Beschreiben und Löschen von Daten im Hauptspeicher im Pufferspeicher (Cache) entsprechende Gültigbits für den Zugriff des Zentralprozessors auf die Daten gesetzt bzw. gelöscht sind,
**dadurch gekennzeichnet,**
- daß eine Logikanordnung vorhanden ist, die bei einem Verändern von Daten im Hauptspeicher durch Direkt-Speicher-Zugriff (DMA) die Verwaltung der Gültigbits auf dem Pufferspeicher derart steuert,
- daß bei einem Direkt-Speicher-Schreibzugriff im Nibble-Mode auf mehrere Adressen im Hauptspeicher, die auch im Pufferspeicher vorhanden sind, zum Löschen der Gültigbits die gleiche Zeit benötigt wird wie bei einem normalen Direkt-Speicher-Zugriff auf eine Hauptspeicheradresse.

2. Anordnung nach Anspruch 1, **dadurch gekennzeichnet,**

- daß die Logikanordnung mit einem Nibble-Zugriffssignal (NC) beaufschlagbar ist, das aktiv ist, wenn ein Nibble-Zugriff erfolgt,

- daß ein Schreib-Lese-Speicher (RAM) zur Speicherung der Gültigbits vorhanden ist, der in Zeilen zu jeweils vier Zellen organisiert ist, beim Aktivsein des Nibble-Zugriffssignals eine Zeile zum Schreiben bzw. Lesen freigibt,

- und daß ein Zwischenspeicher (Latch) vorhanden ist, in dem beim Beschreiben des Schreib-Lese-Speichers (RAM) der Inhalt einer Zeile abgespeichert ist.

87 P 4456

FIG 1

FIG 2

87 P 4456

A1 - A2

A3 - A11

Zeile

Zelle

FIG 3